(19) Europäisches Patentamt
European Patent Office
Office européen des brevets

(11) **EP 0 767 765 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(21) Anmeldenummer: **96912033.6**

(22) Anmeldetag: **24.04.1996**

(51) Int Cl.⁷: **C04B 35/573**, C04B 38/00, C21B 7/06

(86) Internationale Anmeldenummer:
**PCT/EP96/01704**

(87) Internationale Veröffentlichungsnummer:
**WO 96/33959 (31.10.1996 Gazette 1996/48)**

(54) **SiC-FORMKÖRPER**

SiC MOULDED BODY

CORPS MOULE EN SiC

(84) Benannte Vertragsstaaten:
**AT BE CH DE DK ES FI FR GB GR IT LI LU NL SE**

(30) Priorität: **28.04.1995 DE 19515627**
**17.04.1996 DE 19614968**

(43) Veröffentlichungstag der Anmeldung:
**16.04.1997 Patentblatt 1997/16**

(73) Patentinhaber: **DIDIER-WERKE AG**
**65189 Wiesbaden (DE)**

(72) Erfinder:
• **ELSTNER, Ingo**
**D-65203 Wiesbaden (DE)**
• **GRIMM, Daniel**
**D-65307 Bad Schwalbach (DE)**
• **HEBEL, Rudolf**
**D-65462 Ginsheim 2 (DE)**
• **SANTOWSKI, Klaus**
**D-55576 Pleitersheim (DE)**

(74) Vertreter: **Becker, Thomas, Dr., Dipl.-Ing. et al**
**Patentanwälte**
**Becker & Müller,**
**Turmstrasse 22**
**40878 Ratingen (DE)**

(56) Entgegenhaltungen:
**DE-A- 2 232 719          FR-A- 2 444 716**

EP 0 767 765 B1

**Beschreibung**

Die Erfindung betrifft einen kohlenstoffgebundenen SiC-Formkörper mit kömigem SiC, sekundär gebildetem SiC und das Verfahren zur Herstellung des SiC-Formkörpers.

Feuerfeste SiC-Formkörper mit einer Bindematrix aus SiAlON werden im Hochofenschacht eingesetzt und erweisen sich gegenüber der korrosiven und abrasiven Beanspruchung als geeignet (Gießereitechnik 1993 Nr. 5, Seite 163, linke Spalte, Absatz 4). Derartige Formkörper besitzen aber eine unbefriedigende Temperaturwechselbeständigkeit.

Ferner sind SiC-Formkörper mit einer Bindephase aus Siliciumnitrid im Bereich unterer Schacht, Rast, Kohlensack eines Hochofens nicht ausreichend beständig gegenüber Temperaturwechseln. Formkörper auf der Basis von Kohlenstoff haben für den Einsatz im Hochofen insbesondere eine zu niedrige Beständigkeit gegenüber Abrieb.

Nach der DE-OS 22 32 719 sind für den Schacht von Hochöfen SiC-Formkörper mit einer durch Reaktion von Silicium mit Kohlenstoff während des Brandes gebildeten SiC-Bindung bekannt. Gegenüber Temperaturwechselbeanspruchung und dem Angriff von Alkaliverbindungen sind diese Formkörper aber nicht ausreichend beständig.

Aus der EP 0 128 165 gehen Mischungen aus kohlenstoffhaltigen Materialien, feuerfesten Körnern, wie Siliciumcarbid, feuerfesten Oxiden, Siliciummetall und verkokbarem, kohlenstoffhaltigem Bindemittel für die Herstellung feuerfester Steine hervor, die zur Auskleidung von Hochöfen vorgesehen sind (Anspruch 1, 4, 9, 11). Durch den bei relativ niedrigen Temperaturen durchgeführten Brand werden Formkörper erhalten, die eine aus dem kohlenstoffhaltigen Bindemittel entstandene Bindephase aus Kohlenstoff und Silicium haben, worauf insbesondere vorteilhafte Eigenschaften, wie eine geringe Porosität, hohe Festigkeit, Erosionsbeständigkeit und Oxidationsbeständigkeit zurückgeführt werden. Die Beständigkeit gegen Abrieb und den Angriff von Alkalien und von Roheisen ist bei diesen Formkörpern aber nicht in ausreichendem Maße gegeben.

Die Aufgabe nach der Erfindung wird in einem SiC-Formkörper gesehen, der eine hohe mechanische Festigkeit und Abriebfestigkeit, Alkalibeständigkeit und Roheisenbeständigkeit und Oxidationsbeständigkeit, d.h. ein deutlich niedrigeres Abbrandverhalten, hat. Der SiC-Formkörper soll ferner eine verbesserte Temperaturwechselbeständigkeit haben.

Die Lösung der Aufgabe besteht in einem SiC-Formkörper nach den Ansprüchen 1 bis 3 und dem Verfahren zur Herstellung und die Verwendung des SiC-Formkörpers nach den übrigen Ansprüchen.

Der SiC-Formkörper nach der Erfindung besitzt neben einer hohen mechanischen Festigkeit und Abriebfestigkeit, die auf das ursprüngliche, körnige SiC und das sekundär gebildete SiC zurückgeführt werden kann, ein Gefüge mit einem hohen Anteil feiner Poren (sogenannte Mikroporosität). Dieses Gefüge wird wesentlich durch den Kohlenstoff und durch das sekundär gebildete SiC in Verbindung mit dem sekundär gebildeten Siliciumdioxid sowie gegebenenfalls zusätzlich gebildetem Oxinitrid im Bereich der feinkörnigen Matrix bestimmt. Im Zusammenhang mit dem Aufbau des SiC-Formkörpers aus den einzelnen Komponenten und dem besonderen Gefüge ist eine hohe Alkalibeständigkeit, Roheisenbeständigkeit, Temperaturwechselbeständigkeit und Oxidationsbeständigkeit verbunden. Die Oxidationsbeständigkeit wird gefördert durch das während des Brandes in gering sauerstoffhaltiger (sauerstoffarmer) Atmosphäre gebildetes Siliciumdioxid und eventuell gebildete Siliciumoxinitrid. Der SiC-Formkörper ist aufgrund der vorteilhaften Eigenschaften von Abriebfestigkeit, Roheisenbeständigkeit, Alkalibeständigkeit, Temperaturwechselbeständigkeit für die Auskleidung eines Hochofens geeignet. Mit höherem Gehalt an Kohlenstoff kann der SiC-Formkörper als Suszeptor beim induktiven Aufheizen von keramischen Formkörpern eingesetzt werden.

Der SiC-Formkörper nach der Erfindung, seine Herstellung und Eigenschaften werden durch die Beispiele näher erläutert:

Die Mischungen (Tabelle 1) auf der Basis von SiC in üblicher Kornverteilung mit einem Gehalt von 98 % SiC wurden unter Zusatz von Phenolnovolakharz und Hexamethyltetramin zu Formkörpem mit den Abmessungen 64 x 124 x 375 mm$^3$ bei 90 MPa verpreßt.

Zur Durchführung des Brandes werden die Formkörper in Gegenwart von Kohlegrieß und Luftatmosphäre in eine keramische Muffel gesetzt und bei 1300 °C in einem Elektroofen gebrannt. Die Brennatmosphäre bei 1300 °C weist im wesentlichen die Sauerstoffverbindungen CO und SiO auf und ist als sauerstoffarm zu bezeichnen.

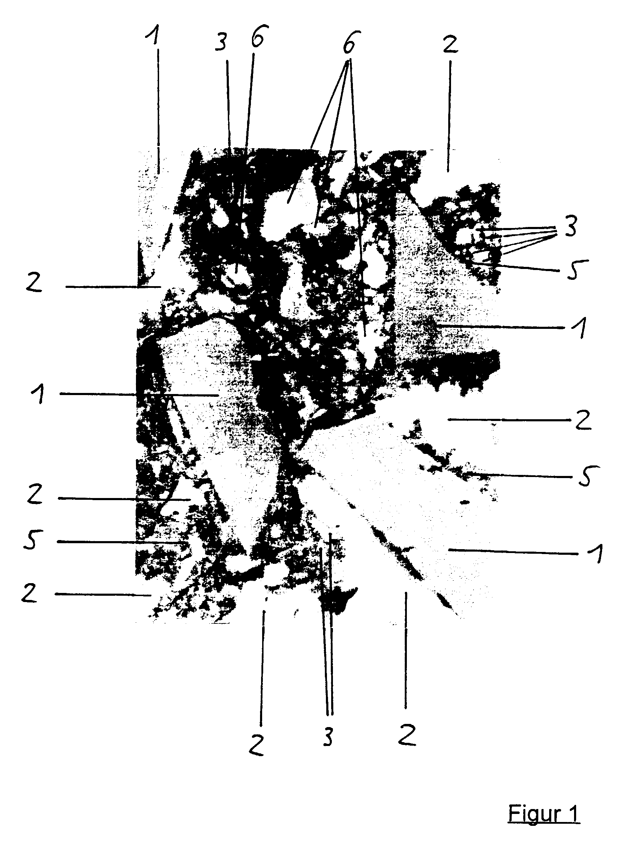

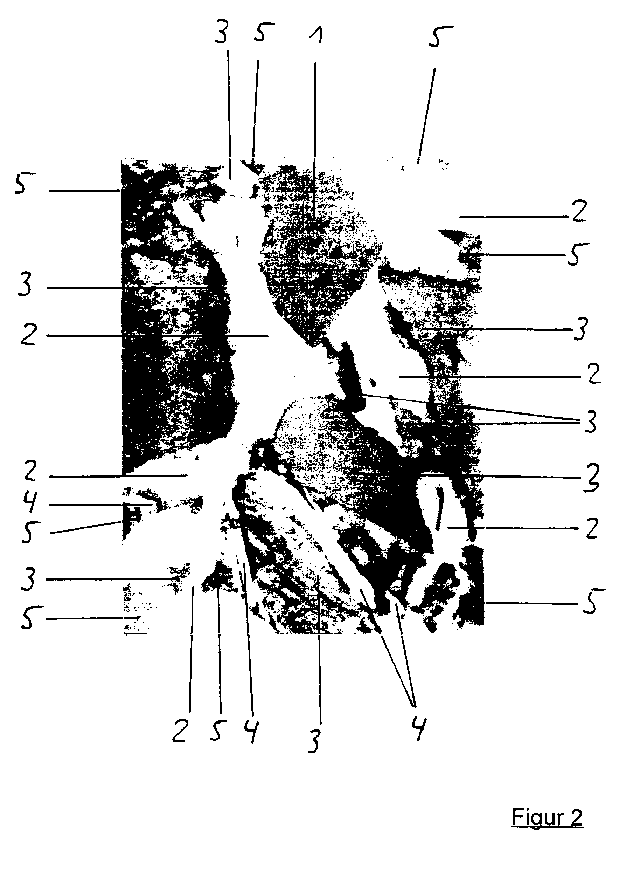

Nach dem Brand werden Formkörper mit einem Gefüge (siehe Figuren 1 + 2 mit Bezugszeichen) erhalten, das neben grobkörnigem SiC (1) in der feinteiligen Matrix Sekundär-SiC mit SiO$_2$ (2) und freiem Kohlenstoff (Anthrazit (3), Graphit (4), vercracktes Harz (5) sowie Al$_2$O$_3$ (6) aufweist.

Zur Prüfung der Eigenschaften der Formkörper (Tabelle 2) wird auf folgendes hingewiesen: Der freie Kohlenstoff und der Gesamtkohlenstoff werden coulometrisch bestimmt. Aus der Differenz ergibt sich durch Rechnung der SiC-Gehalt.

Als Maß für die Temperaturwechselbeständigkeit wird der Wärmespannungsparameter R$_1$ herangezogen:

$$R_1 = \text{Biegefestigkeit x (1- Querkontraktionszahl) ./. (V-Modul x Wärmedehnung)}$$

wobei für die Querkontraktionszahl der Wert 0,1 gesetzt wird (nach W. Schulle: Feuerfeste Werkstoffe, 1990, Seite 139).

Die Prüfung auf Alkalibeständigkeit wird an prismatischen Probestäben durchgeführt, die in einer SiC-Muffel in einer Schüttung aus Koks und Alkalisalz (Verhältnis Koks zu Kaliumcarbonat 4 : 1) eingebettet sind und bei 1250 °C über 48 Stunden gehalten werden. Nach dem Versuch wird die eingetretene Längenänderung bzw. Längenzunahme gemessen.

Die Beständigkeit gegenüber Schlacke und Roheisen wird in einem Labortrommelofen untersucht. Die Zustellung mit den Probesteinen wird durch eine Mischung aus Hochofenschlacke, Roheisen und Koks im Gewichtsverhältnis 2 : 1 : 1 bei Temperaturen im Bereich von 1500 °C beansprucht. Als Maß für die Beständigkeit gegenüber Verschleiß wird die verbliebene Steinstärke in Prozent, bezogen auf die ursprüngliche Steinstärke, verwendet.

Die SiC-Formkörper der Beispiele 1 bis 4 nach der Erfindung haben neben guter mechanischer Festigkeit und Temperaturwechselbeständigkeit insbesondere ein vorteilhaftes Verhalten gegenüber Alkalien und Schlacken sowie eine Porenverteilung mit überwiegend Poren mit einem mittleren Porendurchmesser unter 1 μm.

Die SiC-Formkörper nach Beispiel 3 und 4 sind durch ihr Gefüge und den erhöhten Anteil an freiem Kohlenstoff insbesondere als Suszeptor zum induktiven Aufheizen geeignet. Ihre Leitfähigkeit, ausgedrückt durch den spezifischen elektrischen Widerstand, beträgt für

Beispiel 1: 2000 Ω mm$^2$/m,
Beispiel 2: 700 Ω mm$^2$/m,
Beispiel 3: 260 Ω mm$^2$/m, und
Beispiel 4: 240 Ω mm$^2$/m

bei 1000°C.

TABELLE 1

| Beispiel | | | | |
|---|---|---|---|---|
| Mischungsbestandteile in Gew.-% | 1 | 2 | 3 | 4 |
| SiC 0 - 2,5 mm | 70 | 70 | 50 | 55 |
| Anthrazit 0 - 0,25 mm | 10 | 5 | 20 | 20 |
| Graphit, Flocken | | 5 | 10 | 10 |
| Silicium < 0,075 mm | 15 | 15 | 15 | 15 |
| $Al_2O_3$ calc. > 3 μm | 5 | | 5 | |
| $TiO_2$ Anatas > 1 μm | | 5 | | |
| Phenolharz | +5,5 | +6,0 | +7,0 | +6,0 |
| Hexamethyltetramin | +0,7 | +0,7 | +0,7 | +0,7 |

TABELLE 2

| Beispiel | | | | | |
|---|---|---|---|---|---|
| Eigenschaften | | 1 | 2 | 3 | 4 |
| Rohdichte | g/cm$^2$ | 2,45 | 2,51 | 2,15 | 2,11 |
| Porosität, offen | Vol.-% | 19,4 | 17,6 | 20,9 | 21,1 |
| Poren > 1 μm | Vol.-% | 1,4 | 1,9 | 1,7 | 2,8 |
| Porendurchmesser $d_{50}$ | μm | 0,15 | 0,14 | 0,17 | 0,13 |
| Kaltdruckfestigkeit | MPa | 218 | 135 | 84 | 77 |
| Biegefestigkeit | MPa | 37 | 34 | 18 | 17 |
| V-Modul | GPa | 41 | 32 | 15 | 11 |
| Wärmedehnung 1500°C | 10$^{-6}$/K | 4,1 | | | 4,3 |
| Temperaturwechselbeständigkeit $R_1$ | K | 220 | | | 320 |

TABELLE 2   (fortgesetzt)

| Beispiel | | | | | |
|---|---|---|---|---|---|
| Eigenschaften | | 1 | 2 | 3 | 4 |
| Wärmeleitfähigkeit | W/mK | 10,5 | | | |
| Argonspülung 1000°C | | | | | |
| Abriebfestigkeit nach Böhme | $cm^3/cm^2$ | 0,013 | | | |
| SiC | Gew.-% | 77 | 82 | 63 | 66 |
| C frei | Gew.-% | 7,4 | 6,3 | 23,7 | 24,7 |
| $Al_2O_3$ | Gew.-% | 5,5 | 0,7 | 5,0 | 1,0 |
| $SiO_2$ | Gew.-% | 5,7 | 2,0 | 3,3 | 3,4 |
| $TiO_2$ | Gew.-% | | 4,2 | | |
| Alkalibeständigkeit linear | % | +0,25 | | | |
| Schlackenbeständigkeit | % | | 97 | | |

## Patentansprüche

1. SiC-Formkörper mit körnigem SiC, sekundär gebildetem SiC, 3 - 33 Gew.-% freiem Kohlenstoff, 0,1 - 10 Gew.-% einer sauerstoffhaltigen Siliciumverbindung sowie einer Porosität von 8 - 23 Vol.%, vorzugsweise 14 - 23 Vol.% und einer Porenverteilung mit einem Anteil der Poren mit einem mittleren Porendurchmesser über 1 um von unter 3 Vol.%.

2. SiC-Formkörper nach Anspruch 1, mit 2 - 8 Gew.-% sauerstoffhaltiger Siliciumverbindung sowie einer Porosität von 17 - 20 Vol.% und einer Porenverteilung mit einem Anteil der Poren mit einem mittleren Porendurchmesser über 1 um von unter 2 Vol.%.

3. SiC-Formkörper nach Anspruch 1, mit 0,1 - 5% Gew.-% sauerstoffhaltiger Siliciumverbindung sowie einer Porosität von 8- 17 Vol.-% und einer Porenverteilung mit einem Anteil der Poren mit einem mittleren Porendurchmesser von über 1µm von unter 3 Vol.-%.

4. SiC-Formkörper nach einem der Ansprüche 1 bis 3,
dadurch gekennzeichnet,
daß die sauerstoffhaltige Siliciumverbindung aus $SiO_2$ und zusätzlich gegebenenfalls aus Siliciumoxinitrid besteht.

5. Verfahren zur Herstellung eines SiC-Formkörpers nach einem der Ansprüche 1 bis 4,
aus einer Mischung mit 40 - 80 Gew.-% SiC in der Körnung von maximal 3 mm, vorzugsweise in der Körnung von maximal 2,5 mm, 5 - 40 Gew.-% eines Kohlenstoffträgers, wie Anthrazit und/oder Graphit in der Körnung von maximal 0,3 mm, 2 - 20 Gew.-%, vorzugsweise 10 - 20 Gew.-% metallischen Siliciums in der Körnung von maximal 0,075 mm sowie 5 - 10 Gew.-% eines organischen Harzes, vorzugsweise Phenolnovolakharz, wobei die Bestandteile gemischt und zu einem Formkörper verpreßt werden und anschließend der Formkörper in einer Muffel bei sauerstoffarmer Atmosphäre bei 1200°C - 1500°C gebrannt wird.

6. Verfahren zur Herstellung eines SiC-Formkörpers nach Anspruch 5,
dadurch gekennzeichnet,
daß in der Mischung 5 - 20, vorzugsweise 7 - 15 Gew.-% Kohlenstoffträger, wie Anthrazit und/oder Graphit eingesetzt werden.

7. Verfahren zur Herstellung eines SiC-Formkörpers nach Anspruch 5,
dadurch gekennzeichnet,
daß in der Mischung 20 - 40, vorzugsweise 30 - 35 Gew.-% Kohlenstoffträger, wie Anthrazit und/oder Graphit eingesetzt werden.

8.  Verfahren zur Herstellung eines SiC-Formkörpers nach einem der Ansprüche 5 bis 7,
    dadurch gekennzeichnet,
    daß in der Mischung zusätzlich noch 2 - 10 Gew.-% feinkörniges $Al_2O_3$ und/oder 2 - 10 Gew.-% $TiO_2$, bezogen auf die Summe von körnigem SiC, Kohlenstoffträger und metallischem Silicium, enthalten sind.

9.  Verfahren zur Herstellung eines SiC-Formkörpers nach einem der Ansprüche 5 bis 8,
    dadurch gekennzeichnet,
    daß in der Mischung zusätzlich noch 0,1 - 3 Gew.-% feinkörniges Borcarbid, bezogen auf die Summe von körnigem SiC, Kohlenstoffträger, metallischem Silicium und gegebenenfalls $Al_2O_3$ und/oder $TiO_2$ enthalten sind.

10. Verwendung des SiC-Formkörpers nach einem der Ansprüche 1 bis 4 für die Herstellung eines Hochofensteines zur Auskleidung eines Hochofens.

11. Verwendung des SiC-Formkörpers nach einem der Ansprüche 1 bis 4 als Suszeptor zum induktiven Aufheizen von keramischen, nicht elektrisch leitfähigen Formkörpern, anorganischen Schmelzen, Gläsern und Schlacken.


**Claims**

1.  A SiC body comprising granular SiC, secondarily formed SiC, 3-33 percent by weight free carbon, 0.1-10 percent by weight of an oxygen-containing silicon compound, and a porosity of 8-23 percent by volume, preferably 14-23 percent by volume, and a pore distribution with a fraction of the pores having a mean pore diameter greater than 1 $\mu$m, of less than 3 percent by volume.

2.  A SiC body according to claim 1, with 2-8 percent by weight of oxygen-containing silicon compound, a porosity of 17-20 percent by volume, and a pore distribution with a fraction of the pores having a mean pore diameter greater than 1 $\mu$m, of less than 2 percent by volume.

3.  A SiC body according to claim 1, with 0.1-5 percent by weight of oxygen-containing silicon compound, a porosity of 8-17 percent by volume, and a pore distribution with a fraction of the pores having a mean pore diameter of greater than 1 $\mu$m, of less than 3 percent by volume.

4.  A SiC body according to one of claims 1-3, wherein the oxygen-containing silicon compound is $SiO_2$ and additionally silicon oxynitride, if appropriate.

5.  A process for the production of a SiC body according to one of claims 1 to 4 from a mixture of 40-80 percent by weight of SiC in a grain size of maximally 3 mm, preferably of maximally 2.5 mm, 5-40 percent by weight of a carbon carrier, like anthracite and/or graphite, in a grain size of maximally 0.3 mm, 2-20 percent by weight, preferably 10-20 percent by weight of metallic silicon in a grain size of maximally 0.075 mm and 5-10 percent by weight of an organic resin preferably phenol novolak resin, wherein the components are mixed and pressed into a molded body, and burning the molded body in a muffle in an oxygene poor atmosphere at 1200° C. to 1500° C.

6.  A process for the production of a SiC body according to claim 5, wherein the mixture comprises 5-20, preferably 7-15 percent by weight of the carbon carrier like anthracite and/or graphite.

7.  A process for the production of a SiC body according to claim 5, wherein the mixture comprises 20-40, preferably 30-35 percent by weight of the carbon carrier like anthracite and/or graphite.

8.  A process for the production of a SiC body according to one of claims 5 to 7 wherein the mixture further comprises 2-10 percent by weight of fine-grained $Al_2O_3$ and/or 2-10 percent by weight $TiO_2$, based on the combined weight of granular SiC, carbon carrier and metallic silicon.

9.  A process for the production of a SiC body according to one of claims 5 to 8, wherein the mixture further comprises 0.1-3 percent by weight of fine-grained boron carbide, based on the combined weight of granular SiC, carbon carrier, metallic silicon, and $Al_2O_3$ and/or $TiO_2$, if appropriate.

10. Use of a SiC body according to one of claims 1 to 4 for the production of a blast furnace brick for lining a blast furnace.

**11.** Use of a SiC body according to one of claims 1 to 4 as a susceptor for inductive heating of ceramic, electrically nonconductive molded bodies, inorganic melts, glasses and slags.

**Revendications**

**1.** Pièce de forme en SiC avec du SiC granulaire, du SiC secondairE, de 3 à 33 % en poids de carbone libre, de 0,1 à 10 % en poids d'un composé de silicium contenant de l'oxygène, ainsi qu'une porosité de 8 à 23 % en volume, de préférence de 14 à 23 % en volume, et une distribution des tailles de pores avec une proportion de moins de 3 % en volume de pores ayant un diamètre moyen supérieur à 1 $\mu$m.

**2.** Pièce de forme en SiC selon la revendication 1, avec 2 à 8 % en poids de composé de silicium contenant de l'oxygène, ainsi qu'une porosité de 17 à 20 % en volume et une distribution des tailles de pores avec une proportion de moins de 2 % en volume de pores ayant un diamètre moyen supérieur à 1 $\mu$m.

**3.** Pièce de forme en SiC selon la revendication 1, avec 0,1 à 5 % en poids de composé de silicium contenant de l'oxygène, ainsi qu'une porosité de 8 à 17 % en volume et une distribution des tailles de pores avec une proportion de moins de 3 % en volume de pores ayant un diamètre moyen supérieur à 1 $\mu$m.

**4.** Pièce de forme en SiC selon l'une des revendications 1 à 3, caractérisée en ce que le composé de silicium contenant de l'oxygène est constitué par du $SiO_2$ et en plus, le cas échéant, de l'oxynitrure de silicium.

**5.** Procédé de fabrication d'une pièce de forme en SiC selon l'une des revendications 1 à 4, à partir d'un mélange de 40 à 80 % en poids de SiC d'une granulométrie maximale de 3 mm, de préférence une granulométrie maximale de 2,5 mm, de 5 à 40 % en poids d'un porteur de carbone tel que l'anthracite et/ou le graphite d'une granulométrie maximale de 0,3 mm, de 2 à 20 % en poids, de préférence 10 à 20 % en poids, de silicium métallique d'une granulométrie maximale de 0,075 mm, ainsi que de 5 à 10 % en poids d'une résine organique, de préférence une résine novolaque phénolique, dans lequel les constituants sont mélangés et comprimés en une pièce de forme et ensuite la pièce de forme est cuite dans un moufle sous atmosphère pauvre en oxygène à une température de 1200 °C à 1500 °C.

**6.** Procédé de fabrication d'une pièce de forme en SiC selon la revendication 5, caractérisé en ce que l'on incorpore dans le mélange de 5 à 20, de préférence 7 à 15 % en poids, de porteur de carbone tel que l'anthracite et/ou le graphite.

**7.** Procédé de fabrication d'une pièce de forme en SiC selon la revendication 5, caractérisé en ce que l'on incorpore dans le mélange de 20 à 40, de préférence 30 à 35 % en poids, de porteur de carbone tel que l'anthracite et/ou le graphite.

**8.** Procédé de fabrication d'une pièce de forme en SiC selon l'une des revendications 5 à 7, caractérisé en ce que le mélange contient également en plus de 2 à 10 % en poids d'$Al_2O_3$ à grain fin et/ou de 2 à 10 % en poids de $TiO_2$, ramené à la somme du SiC granulaire, du porteur de carbone et du silicium métallique.

**9.** Procédé de fabrication d'une pièce de forme en SiC selon l'une des revendications 5 à 8, caractérisé en ce que le mélange contient également en plus de 0,1 à 3 % en poids de carbure de bore à grain fin, ramené à la somme du SiC granulaire, du porteur de carbone, du silicium métallique et de l'$Al_2O_3$ et/ou $TiO_2$ éventuels.

**10.** Utilisation de la pièce de forme en SiC selon l'une des revendications 1 à 4 pour fabriquer une brique de garnissage pour le revêtement d'un haut fourneau.

**11.** Utilisation de la pièce de forme en SiC selon l'une des revendications 1 à 4 comme susceptance pour le chauffage inductif de pièces de forme céramiques non conductrices de l'électricité, de charges inorganiques, de verres et de laitiers.

Figur 1

Figur 2